**Europäisches Patentamt**

**European Patent Office**

**Office européen des brevets**

(19)

(11) Veröffentlichungsnummer: **0 193 005**
**B1**

(12)

# EUROPÄISCHE PATENTSCHRIFT

(45) Veröffentlichungstag der Patentschrift:
24.08.88

(21) Anmeldenummer: **86101480.1**

(22) Anmeldetag: **05.02.86**

(51) Int. Cl.⁴: **B 66 C 1/66,** B 65 G 1/04,
B 65 D 85/20

(54) **Vorrichtung zum Lagern und Transportieren schwerer Lasten.**

(30) Priorität: **28.02.85 DE 3507050**

(43) Veröffentlichungstag der Anmeldung:
**03.09.86 Patentblatt 86/36**

(45) Bekanntmachung des Hinweises auf die Patenterteilung:
**24.08.88 Patentblatt 88/34**

(84) Benannte Vertragsstaaten:
**AT CH DE FR GB IT LI SE**

(56) Entgegenhaltungen:
DE - A - 3 149 712
DE - C - 1 001 473
FR - A - 1 431 799
FR - A - 1 457 387
FR - A - 1 526 187
GB - A - 892 665
US - A - 2 905 501
US - A - 4 045 071

(73) Patentinhaber: **Potocnjak, Tomislav,**
**Neckarstrasse 64/1, D-7128 Lauffen (DE)**

(72) Erfinder: **Potocnjak, Tomislav, Neckarstrasse 64/1,**
**D-7128 Lauffen (DE)**

(74) Vertreter: **Jackisch, Walter, Dipl.-Ing., Menzelstrasse 40,**
**D-7000 Stuttgart 1 (DE)**

ACTORUM AG

## Beschreibung

Die Erfindung betrifft eine Vorrichtung zum Lagern und Transportieren schwerer Lasten mit den Merkmalen des Oberbegriffs des Anspruchs 1.

Bei einer bekannten Vorrichtung dieser Art (DE-PS 2738332) ist es nachteilig, dass die Tragarme der Traverse beim Einhängen in die hornartig gebogenen Hakenaufhängungen des Lagerbocks an die Oberkante dieser Aufhängehaken anschlagen. Dies kommt dadurch zustande, dass die Tragarme der Traverse beim Einhängevorgang auf die obere freiliegende Schmalkante der plattenförmigen Aufhängehaken auftreffen und infolge des hohen Gewichtes der Traverse Kerbbeschädigungen an diesen schmalen Kanten verursacht werden. Diese Kerbbeschädigungen verhindern ein reibungsarmes Gleiten der an einem Hebeseil eines Hubwerkes hängenden Traverse, so dass dadurch eine unerwünschte automatische Abschaltung des Hubwerkes erfolgen kann. Ein weiterer Nachteil besteht darin, dass sich die Traverse mit den vier Armen während des Einführvorganges bei der Bewegung nach unten auch weit seitlich verschiebt, so dass für dieses seitliche Ausweichen ein entsprechend ausreichender Platz bzw. Sicherheitsabstand vorgesehen sein muss. Das seitliche Ausweichen ist erforderlich, damit die Tragarme der Traverse an der hornatigen Hakenaufhängung vorbeigelangen, bis sie schliesslich eine Tiefenstellung erreicht haben, bei der sie im Öffnungsbereich des Hakens sich befinden. Danach wird die Traverse über das Hubwerk hochgezogen, so dass die Tragarme in die hornartigen Aufhängehaken gelangen. Infolge der nach innen geknickten Ausführung der Aufhängeplatten der Haken ist ein ausreichender seilicher Sicherheitsabstand beidseits der Traverse erforderlich, wodurch ein Verlust an nutzbarem Raum bei der Verwendung der bekannten Lagerböcke in Hallen oder dergleichen begrenzten Räumen gegeben ist. Ausserdem hat die bekannte Ausführung den Nachteil, dass die hakenförmigen Aufhängeplatten aufwendig in der Herstellung und daher teuer sind, zumal die Aufhängeplatten zwischen zusätzlich vorgesehenen Eckpfeilern des Lagerbocks angeschweisst sind.

Die Aufgabe der Erfindung besteht darin, eine Vorrichtung zum Lagern und Transportieren schwerer Lasten mit den Merkmalen des Oberbegriffs des Anspruchs 1 dahingehend weiterzubilden, dass eine einfache und kostengünstige Herstellung mit möglichst wenig Teilen erzielt wird und dass auch bei unvorsichtiger Arbeitsweise des Kranführers der Einfädelvorgang der Tragarme ohne Beschädigung der eigentlichen Aufhängungsteile derart selbsttätig zwangsgeführt mit hoher Sicherheit vollzogen werden kann, dass im Falle eines nicht eingehängten Tragarmendes auch die übrigen Tragarmenden nicht die Einhängestellung einnehmen können.

Diese Aufgabe wird erfindungsgemäss durch die kennzeichnenden Merkmale des Anspruchs 1 gelöst.

Bevorzugte Ausgestaltungen und Weiterbildungen sowie weitere Vorteile und wesentliche Einzelheiten der Erfindung sind den Merkmalen der Unteransprüche, der nachfolgenden Beschreibung und der Zeichnung zu entnehmen, die in schematischer Darstellung bevorzugte Ausführungsformen als Beispiel zeigt. Es stellen dar:

Fig. 1 eine räumliche Ansicht eines Lagerbocks der erfindungsgemässen Vorrichtung,

Fig. 2 eine Vorderansicht des Lagerbocks der Fig. 1 mit darüber gestrichelt angedeuteter Traverse der erfindungsgemässen Vorrichtung,

Fig. 3 eine Draufsicht auf den Lagerbock der Fig. 1 und 2,

Fig. 4 eine Seitenansicht des Lagerbocks der Fig. 1 bis 3 mit einem gestrichelt angedeuteten weiteren aufgestapelten Lagerbock,

Fig. 5 eine Vorderansicht eines Teils des erfindungsgemässen Lagerbocks änlich der Fig. 2, jedoch in einer anderen Ausführungsform,

Fig. 6 eine Seitenansicht der erfindungsgemässen Vorrichtung mit zwei die Last tragenden Lagerböcken mit darüber befindlicher Traverse in verschiendenen Einfädelungspositionen,

Fig. 7 eine Draufsicht der Traverse der Fig. 6,

Fig. 8 eine Vorderansicht der Traverse der Fig. 6 und 7 mit U-förmigen Walzprofil-Längsträgern,

Fig. 9 eine Vorderansicht der Traverse änlich der Fig. 8, jedoch mit aus Vierkantrohen gebildeten Längsträgern,

Fig. 10 eine Vorderansicht der Traverse ähnlich den Fig. 8 und 9, jedoch mit aus im Querschnitt kreisrunden Rohren gebildeten Längsträgern und an den Enden der Tragarme vorgesehenen Tragrollen und

Fig. 11 eine vergrösserte Teilschnittansicht des Tragarmendbereichs mit einem innerhalb der Tragrolle angeordneten Mikroschalter für eine Belegtmeldung.

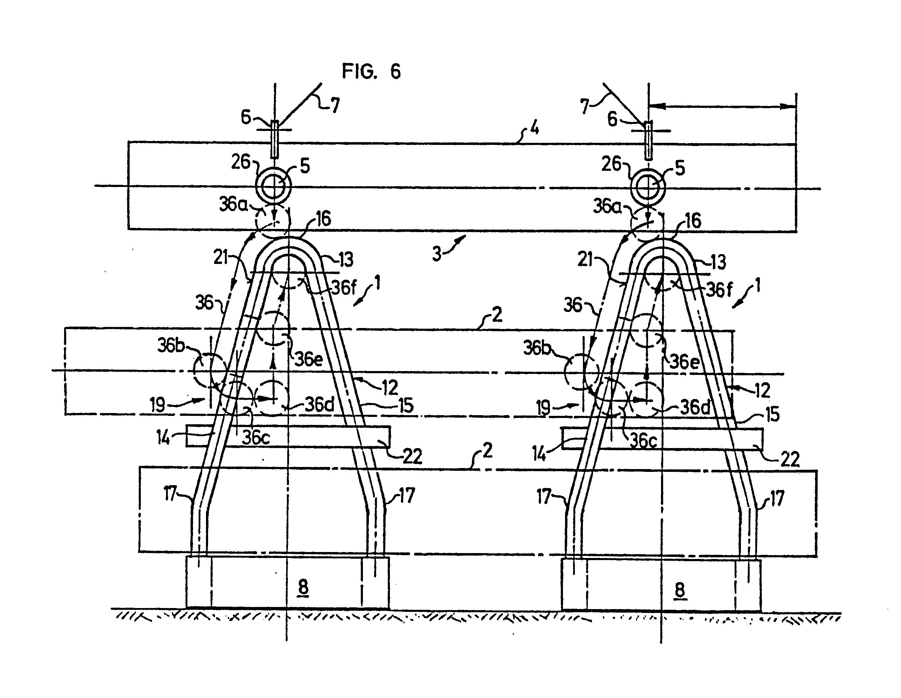

Die in der Zeichnung dargestellte erfindungsgemässe Vorrichtung ist insbesondere zum Lagern und Transportieren schwerer Metallstäbe, wie Rohre, Rundeisen, T-Träger, Winkeleisen und dergleichen Profilstäbe, vorgesehen und weist gemäss dem Ausführungsbeispiel der Fig. 6 zwei Lagerböcke 1 auf. Die beiden Lagerböcke 1 sind zur Aufnahme der langgestreckten Last 2 in einem Abstand zueinander angeordnet. Sofern eine kürzere Last (etwa nur halb so lang) zu lagern und zu transportieren ist, ist es grundsätzlich auch möglich, dafür nur einen einzigen Lagerbock 1 vorzusehen.

Über den beiden Lagerböcken 1 befindet sich eine Traverse 3, die Längsträger 4 und Tragarme 5 aufweist, an denen die Lagerböcke 1 angehängt werden können. Die Traverse 3 besitzt Befestigungslaschen 6, die an den Längsträgern 4 und vorzugsweise auch an den Tragarmen 5 angeschweisst sind und an denen Ketten oder Seile 7 eines hier nicht näher dargestellten Hubwerks (Kranbahn oder dergleichen) angeordnet sind.

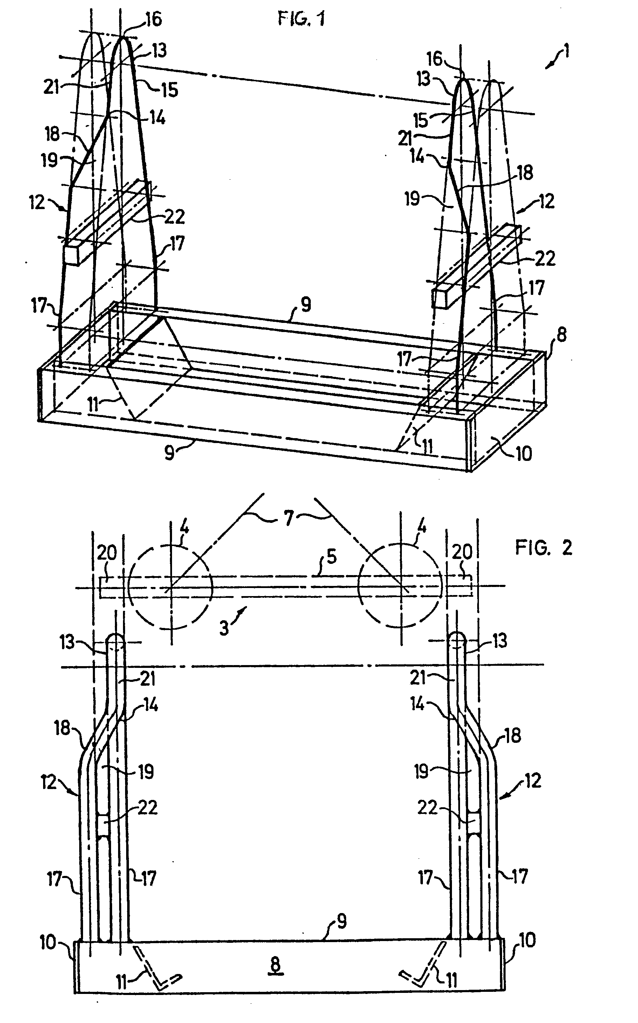

Der in den Fig. 1 bis 4 und 6 dargestellte Lagerbock 1 weist einen die Last 2 tragenden Grundkörper 8 auf, der zwei parallele Längsprofile 9 sowie zwei Stirnplatten 10 besitzt und mit diesen bevorzugt als rechteckförmiger Profilrahmen ausgeführt ist. Innerhalb dieses Profilrahmens sind zwischen den beiden Längsprofilen 9 zusätzliche Versteifungsstreben vorgesehen, die geneigt angeordnet sind bzw. geneigte Führungsflächen besitzen und als Einführschräge 11 ausgebildet sind.

An den beiden Stirnseitenbereichen des Grundkörpers 8 sind vertikale Seitenteile 12 vorgesehen, die sich über den Einführschrägen 11 befinden und rechtwinklig vom Grundkörper 8 nach oben abstreben. Die Seitenteile 12 können bevorzugt jeweils aus einem einzigen Metallrohr hergestellt sein, das so gebogen ist, dass der obere Seitenteilbereich als geschlossene Tragöse 13 ausgebildet ist, die zwei dachförmig geneigte Schenkel 14, 15 besitzt. Der die beiden Schenkel 14, 15 der Tragöse 13 verbindende First ist dabei bevorzugt als annähernd halbkreisförmige Rundbiegung 16 ausgeführt. An die beiden Schenkel 14, 15 der Tragöse 13 schliessen sich nach unten hin gerichtete Verlängerungen 17 an, deren Enden auf der Oberseite des Grundkörpers 8 angeschweisst sind.

Insbesondere den Fig. 1 bis 3 ist zu entnehmen, dass der eine Schenkel 14 der Tragöse 13 in der Ebene quer zur Längsrichtung des Grundkörpers 8 gesehen einen Versatz 18 aufweist, der so ausgeführt ist, dass ein Einhängefreiraum 19 zur Einführung des Endteils 20 des Tragarmes 5 ausgebildet ist. Der Versatz 18 für den Einhängefreiraum 19 befindet sich bevorzugt unterhalb eines von der Rundbiegung 16 schräg nach unten verlaufenden Führungsteils 21 des Schenkels 14, so dass der Endteil 20 des Tragarmes 5 auch bei einem unvorsichtigen Herablassen der Traverse 3 zwangsgeführt in den Bereich des Einhängefreiraums 19 und beim anschliessenden Anheben der Traverse 3 in den Bereich der Rundbiegung 16 der Tragöse 13 gelangt.

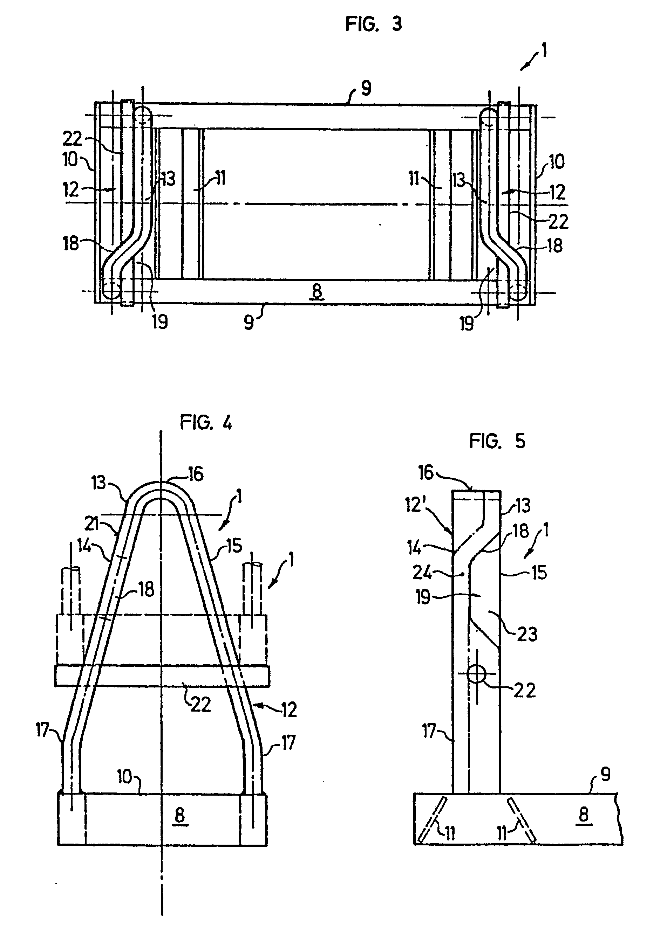

Vor allem die Fig. 2 und 3 zeigen deutlich, dass der Abstand zwischen den beiden Tragösen 13 des Lagerbocks 1 in Längsrichtung des Grundkörpers 8 gesehen im Bereich der Schenkel 14, 15 unterschiedlich ist. Und zwar ist der Abstand zwischen den beiden Schenkeln 14, die den Versatz 18 aufweisen, grösser als der Absand zwischen den beiden anderen Schenkeln 15, die aus der Ebene heraus nicht versetzt sind. Weiterhin ist zu erkennen, dass zwischen den beiden Schenkeln 14, 15 einer jeden Tragöse 13 eine horizontale Verbindungsstrebe 22 angeordnet ist. Die Verbindungsstrebe 22 befindet sich etwa in der Mitte zwischen dem Grundkörper 8 und der oberen Rundbiegung 16 der Tragöse 13. Die Länge der Verbindungsstrebe 22 entspricht dabei etwa der Breite des Grundkörpers 8. Die Verbindungsstrebe 22 trägt zur Versteifung des Seitenteils 12 des Lagerbocks 1 bei und dient ausserdem als Auflager für das Übereinanderstapeln mehrerer Lagerböcke 1 (Fig. 4). Die Verbindungsstrebe 22 kann z.B. aus einem Flachstahl oder einem Vierkantrohr bestehen.

Bei dem in der Fig. 5 dargestellten Ausführungsbeispiel besteht das Seitenteil 12' des Lagerbocks 1 aus einem Flachstahl, der im wesentlichen genauso spitzwinklig dachförmig gebogen worden ist wie das Seitenteil 12 des vorbeschriebenen Ausführungsbeispiels, so dass ebenfalls eine geschlossene Tragöse 13 mit einer oberen Rundbiegung 16 und zwei schräg abfallenden Schenkeln 14, 15 sowie sich daran anschliessenden Verlängerungen 17 gegeben ist. Ein Unterschied besteht jedoch darin, dass der Versatz 18 des Schenkels 14 nicht durch Verbiegen, sondern durch dass Herausarbeiten einer Aussparung 23, welche als Einhängefreiraum 19 für den Tragarm 5 dient, gebildet ist, so dass im Bereich des Versatzes 18 ein in der Breite des Schenkels 14 reduzierter Tragsteg 24 besteht. Es kann im Rahmen der Erfindung auch zweckmässig sein, die Tragöse 13 bzw. das Seitenteil 12 z.B. aus einem Ovalrohr, einem Vierkantrohr oder einem anders profilierten Stangenmaterial herzustellen.

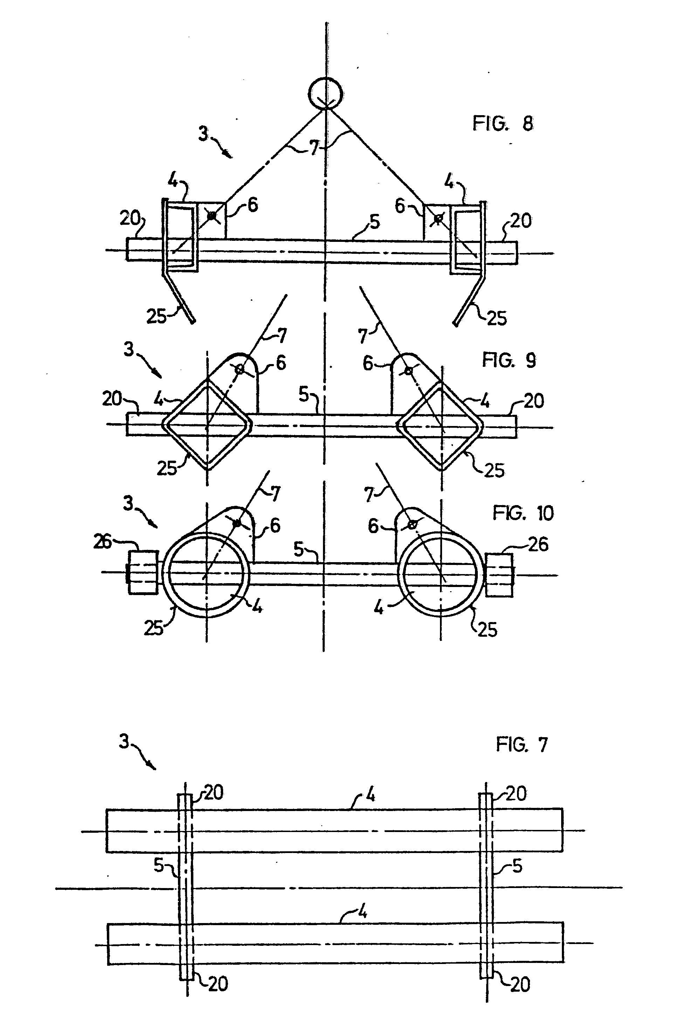

Insbesondere den Fig. 7 bis 10 ist zu entnehmen, dass die die Lagerböcke 1 aufnehmende Traverse 3 zwei parallele Längsträger 4 aufweist, an denen die als Querstreben ausgebildeten Tragarme 5, die parallel zum Grundkörper 8 des Lagerbocks 1 ausgerichtet sind, so befestigt sind, dass ein verwindungssteifer Rechteckrahmen gegeben ist, wobei die Endteile 20 der Tragarme 5 aussen an den Längsträgern 4 nur etwas vorstehen. Beim Ausführungsbeispiel der Fig. 8 bestehen die Längsträger 4 aus im Querschnitt U-förmigen Walzprofilen. An den Aussenseiten der U-Längsträger 4 sind Seitenbleche angeordnet, die nach unten hin als schräg zueinander verlaufende Führungsflächen 25 ausgeführt sind.

Bei der Traverse 3 der Fig. 9 bestehen die Längsträger 4 aus Vierkantrohren, bei denen zwei gegenüberliegende Ecken in der vertikalen Ebene und die beiden anderen gegenüberliegenden Ecken in der horizontalen Ebene liegen. Die Tragarme 5 durchsetzen die Vierkant-Längsträger 4 diagonal durch die in der horizontalen Ebene liegenden Eckbereiche. Die in der Fig. 10 dargestellte Traverse 3 weist aus Rundrohren hergestellte Längsträger auf, die von den Tragarmen 5 diametral quer durchsetzt sind. Sowohl bei den Vierkant-Längsträgern 4 der Fig. 9 als auch bei den Rohr-Längsträgern 4 der Fig. 10 sind die Längsträgerunterseiten gleichsam als Führungsflächen 25 ausgeführt. Beim Ausführungsbeispiel der Fig. 10 ist an allen Endteilen 20 der Tragarme 5 je eine Tragrolle 26 gelagert. Die Tragrollen 26 können Kugellager oder dergleichen aufweisen, so dass ein ausgesprochen reibungsarmes Abrollen beim Einhängen der Traverse 3 in die Tragösen 13 des Lagerbocks 1 erzielt wird. Es sei noch darauf hingewiesen, dass die Fig. 8 bis 10 deutlich offenbaren, dass die Befestigungslaschen 6 für eine einwandfreie Lastaufnahme sowohl an den Längsträgern 4 als auch an den Tragarmen 5 angeschweisst sind.

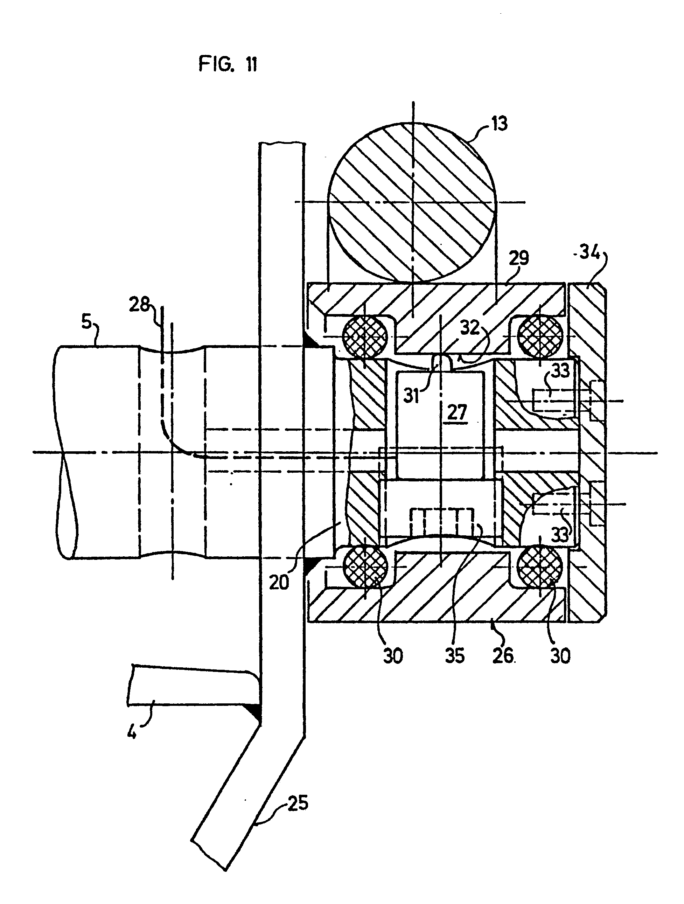

Die Fig. 11 zeigt, dass in der Tragrolle 26 des Tragarms 5 ein Mikroschalter 27 gelagert ist. Der Mikroschalter 27 ist an einer elektrischen Leitung 28 angeschlossen und ist für eine Belegtmeldung vorgesehen, indem bei einer Gewichtsbelastung, also beim Anheben der Traverse 3, ein Licht- und/oder Akustiksignal erzeugt wird, das anzeigt, dass die Tragarme 5 der Traverse 3 in sämtlichen Tragösen 13 der Lagerblöck 1 vollständig und korrekt eingehängt sind, so dass die Last 2 über das Hubwerk gefahrlos hochgezogen werden kann. Für die Betätigung des Mikroschalters 27 weist die Tragrolle 26 einen äusseren Kontaktring 29 auf, der mit seiner Umfangsfläche an der Innenseite der Rundbiierung 16 der Tragöse 13 anliegt und auf zwei am Endteil 20 auf Abstand zueinander angeordneten gummielastischen O-Ringen 30 gelagert ist. Im Abstandsbreich zwischen diesen beiden O-Ringen 30 befindet sich der Mikroschalter 27, dessen Betätigungstössel 31 an der Innenfläche 32 des Kontaktringes anliegt und bei Belastung vom Kontaktring 29 in den Mikroschalter 27 hineingedrückt wird. Die äussere Stirnseite der Tragrolle 26 ist von einem mittels Schrauben 33 lösbar befestigten Verschlussdeckel 34 verschlossen, so dass eine dichte Abschirmung gegen Verschmutzung gegeben ist. Zudem ist zu erkennen, dass unter dem Mikroschalter 27 eine Einstellschraube 35 vorgesehen ist, mittels der der Weg des Betätigungsstössels 31 für einen zuverlässigen Schaltpunkt stufenlos justiert werden kann.

Der Fig. 6 ist die Bewegungskurve 36 der Endteile 20 bzw. Tragrollen 26 der Tragarme 5 beim Herablassen und anschliessenden Hochziehen der Traverse 3 während des Einhängevorgangs in die Tragösen 13 zu entnehmen. In der Position 36a berührt die Tragrolle 26 des Tragarms 5 die Aussenseite der Rundbiegung 16. Beim weiteren Herablassen der Traverse 3 rollen die Tragrollen 26 auf den schrägen Führungsteilen 21 nach unten in den Bereich des Einhängefreiraums 19 hinein, bis sie die Position 36b einnehmen, welche die grösste Auspendelung der Traverse 3 darstellt. In der tiefsten Position 36c gelangt die Tragrolle 26 durch den Einhängefreiraum 19 in die Tragöse 13 und pendelt nach innen in die Position 36d. Danach wird die Traverse 3 hochgezogen, so dass die Tragrolle 26 über dem Bereich des Einhängefreiraums 19 in der Position 36e an der Innenseite der Tragöse 13 zur Anlage kommt. Beim weiteren Hochziehen der Traverse 3 gelangt die Tragrolle 26 reibungsarm in die oberste Position 36f, wobei sie sich an der Innenseite der Tragöse 13 im Bereich der annähernd halbkreisförmigen Rundbiegung 16 befindet und wobei der eigentliche Lastangriff erfolgt. Sobald die Last 2 von der Tragrolle 26 im obersten Bereich der Tragöse 13 aufgenommen wird, erfolgt über den Mikroschalter 27 ein Signal, das anzeigt, dass der Einhängevorgang sicher und vorschriftsmässig abgeschlossen ist.

Ein wesentlicher Vorteil der erfindungsgemässen Vorrichtung besteht darin, dass während des gesamten reibungsarmen Einhängevorgangs die Traverse 3 beim Herablassen an den Tragösen 13 immer am inneren Holm geführt ist. Dadurch ist zudem eine hohe Sicherheit während des Einhängens gewährleistet, da durch die am Tragarm 5 paarweise angeordneten Tragrollen 26 die Einhängung blockiert wird, wenn an einer Seite ein Teil hängen bleibt. Nur wenn alle vier Tragrollen 26 ihren freien Weg in die Tragösen 13 finden, kann die Einhängung durchgeführt werden, so dass insgesamt mit einfachen Mitteln eine kostengünstige Herstellung und hohe Sicherheit gegen unsachgemässe Bedienung gegeben ist.

**Patentansprüche**

1. Vorrichtung zum Lagern und Transportieren schwerer Lasten, insbesondere metallischer Profilstäbe, Rohre und dergleichen, mit mindestens einem U-förmigen Lagerbock, der einen Grundkörper (8) und zwei Seitenteile (12) aufweist, an denen je eine Aufhängung vorgesehen ist, in die ein Tragarm einer Traverse (3) einhängbar ist, dadurch gekennzeichnet, dass die Aufhängung des Lagerbocks (1) als geschlossene Tragöse (13) mit zwei dachförmig geneigten Schenkeln (14, 15) ausgeführt ist, von denen der eine Schenkel (14) in der Ebene quer zur Längsrichtung des Grundkörpers (8) gesehen zur Bildung eines Einhängefreiraums (19) für den Tragarm (5) gegenüber dem anderen Schenkel seitlich versetzt ist.

2. Vorrichtung nach Anspruch 1, dadurch gekennzeichnet, dass der Versatz (18) des Schenkels (14) für den Einhängefreiraum (19) unterhalb eines vom First der Tragöse (13) schräg abfallenden Führungsteils (21) des Schenkels (14) ausgebildet ist.

3. Vorrichtung nach einem der Ansprüche 1 oder 2, dadurch gekennzeichnet, dass der First der Tragöse (13) als spitzwinkelförmige Rundbiegung (16) der Schenkel (14, 15) ausgebildet ist.

4. Vorrichtung nach einem der Ansprüche 1 bis 3, dadurch gekennzeichnet, dass die Tragöse (13) mit sich an die dachförmig verlaufenden Schenkel (14, 15) anschliessenden Verlängerungen (17) am Grundkörper (8) befestigt und mit diesen als Seitenteil (12) des Lagerbocks (1) augeführt ist.

5. Vorrichtung nach einem der Ansprüche 1 bis 4, dadurch gekennzeichnet, dass die Tragöse (13) mit dem Versatz (18) für den Einhängefreiraum (19) und den Verlängerungen (17) der Schenkel (14, 15) aus einem bevorzugt spitzdachförmig gebogenen Metallrohr hergestellt ist.

6. Vorrichtung nach einem der Ansprüche 1 bis 4, dadurch gekennzeichnet, dass die Tragöse (13) mit den Verlängerungen (17) der Schenkel (14, 15) aus einem spitzdachförmig gebogenen Flachstahl hergestellt und der Einhängefreiraum (19) im Versatzbereich des einen geneigten Schenkels (14) als die Breite des Flachstahls bis auf einen Tragsteg (24) reduzierende Aussparung (23) ausgebildet ist (Fig. 5).

7. Vorrichtung nach einem der Ansprüche 1 bis 6, dadurch gekennzeichnet, dass unterhalb des Versatzes (18) für den Einhängefreiraum (19) zur Abstützung eines aufgestapelten weiteren Lagerbocks (1) zwischen den beiden Schenkeln (14, 15) der Tragöse (13) eine horizontale Verbindungsstrebe (22) angeordnet ist (Fig. 4).

8. Vorrichtung nach Anspruch 7, dadurch gekennzeichnet, dass die Verbindungsstrebe (22) etwa in der Mitte zwischen dem Grundkörper (8) und dem First der Tragöse (13) zwischen deren beiden Schenkeln (14, 15) angeordnet ist und ihre Länge etwa der Breite des Grundkörpers (8) entspricht.

9. Vorrichtung nach einem der Ansprüche 1 bis 8, dadurch gekennzeichnet, dass der Abstand zwischen den Schenkeln (14, 15) zweier an beiden Stirnseiten des Lagerbocks (1) angeordneter Tragösen (13) in Längsrichtung des Grundkörpers (8) im Bereich des Einhängefreiraums (19) grösser ist als der Abstand zwischen den anderen Schenkeln (15) der beiden Tragösen (13).

10. Vorrichtung nach einem der Ansprüche 1 bis 9, dadurch gekennzeichnet, dass unter der Tragöse (13) am Grundkörper (8) mindestens eine Einführschräge (11) zur Tragösenzentrierung beim Aufeinanderstalpen mehrerer Lagerböcke (1) vorgesehen ist.

11. Vorrichtung nach Anspruch 10, dadurch gekennzeichnet, dass der Grundkörper (8) des die stirnseitigen Tragösen (13) auf weisenden Lagerbocks (1) als im wesentlichen rechteckförmiger Profilrahmen ausgeführt und die Einführschräge (11) als Versteifungsstrebe des Profilrahmens ausgebildet ist.

12. Vorrichtung nach einem der Ansprüche 1 bis 11, dadurch gekennzeichnet, dass die in die Tragösen (13) einhängbaren Tragarme (5) der Traverse (3) als Querstreben zwischen zwei parallel zum Grundkörper (8) des Lagerbocks (1) verlaufenden Längsträgern (4) der Traverse (3) angeordnet sind (Fig. 7), wobei die Längsträger (4) im Querschnitt als U-Profile oder Vierkantrohre oder als Rundrohre ausgeführt sind, die von den Tragarmen (5) diametral durchsetzt sind.

13. Vorrichtung nach Anspruch 12, dadurch gekennzeichnet, dass an der Unterseite der Längsträger (4) der Traverse (3) zur Einführung zwischen die Tragösen (13) des Lagerbocks (1) schräge Führungsflächen (25) vorgesehen sind.

14. Vorrichtung nach Anspruch 12 oder 13, dadurch gekennzeichnet, dass an den die Längsträger (4) der Traverse (3) überragenden Endbereichen der Tragarme (5) eine in die Tragöse (13) des Lagerbocks (1) eingreifende Tragrolle (26) gelagert ist, wobei in der Tragrolle (26) des Tragarms (5) der Traverse (3) ein an einer elektrischen Leitung (28) angeschlossener Mikroschalter (27) für eine Belegtmeldung (Licht- und/oder Akustiksignalgabe bei erfolgter Einhängung anbringbar ist.

15. Vorrichtung nach Anspruch 14, dadurch gekennzeichnet, dass die Tragrolle (26) einen in radialer Richtung elastisch gelagerten äusseren Kontaktring (29) aufweist, an dessen Innenfläche (32) ein Betätigungsstössel (31) des Mikroschalters (27) anliegt, wobei der äussere Kontaktring (29) der Tragolle (26) auf mindestens einem aus gummielastischem Material bestehenden O-Ring (30) am Endbereich des Tragarmes (5) lagerbar ist.

16. Vorrichtung nach Anspruch 15, dadurch gekennzeichnet, dass der Mikroschalter (27) im Kontaktring (29) der Tragrolle (26) im Bereich zwischen zwei elastischen O-Ringen (30) angeordnet ist und dass der Kontaktring (29) an seiner äusseren Stirnseite einen Verschlussdeckel (34) aufweist.

**Claims**

1. A device for the storage and transportation of heavy loads, especially sectional metal bars, pipes and suchlike, with at least one U-shaped bearing block, which has a base section (8) and two side pieces (12), on each of which a suspension part is provided, into which a supporting arm (5) of a girder (3) can fit for the purpose of suspension, characterised in that the suspension part of the bearing block (1) is made in the form of a closed carrying loop (13) with two legs (14, 15) inclined in the form of a roof, one leg (14) of which is offset laterally, relative to the other leg (15), in the plane viewed at rightangles to the longitudinal direction of the base section (8), so as to form a free suspension space (19) for the supporting arm (5).

2. A device according to claim 1, characterised in that the offset (18) of the leg (14) for the free suspension space (19) is formed beneath a leading part (21) of the leg (14) which is inclined downwards from the top of the carrying loop (13).

3. A device according to one of the claims 1 or 2, characterised in that the top of the carrying loop (13) is in the form of an acute-angle shaped bent section (16) of the legs (14, 15).

4. A device according to any one of the claims 1 to 3, characterised in that the carrying loop (13) is attached to the base section (8) by extensions (17) which are connected to the legs (14, 15) shaped in the form of a roof and forms with said extensions the side piece (12) of the bearing block (1).

5. A device according to any one of the claims 1 to 4, characterised in that the carrying loop (13) with the offset (18) for the free suspension space (19) and the extensions (17) of the legs (14, 15) is produced from a metal pipe preferably bent in the form of a pointed roof.

6. A device according to any one of claims 1 to 4, characterised in that the carrying lopp (13) with the extensions (17) of the legs (14, 15) is produced from a flat steel bar bent in the form of a pointed roof and the free suspension space (19) in the area of the offset of one of the inclined legs (14) is designed as a recess (23) reducing the width of the flat steel bar down to a bearing segment (23) (Fig. 5).

7. A device according to any one of the claims 1 to 6, characterised in that a horizontal connecting strut (22) is arranged between the two legs (14, 15) of the carrying loop (13) beneath the offset (18) for the free suspension space (19) for the purpose of supporting a further stacked bearing block (1) (Fig. 4).

8. A device according to claim 7, characterised in that the connecting strut (22) is arranged roughly in the middle between the base section (8) and the top of the carrying loop (13) between its two legs (14, 15) and its length corresponds roughly to the width of the base section (8).

9. A device according to any one of claims 1 to 8, characterised in that the distance between the legs (14, 15) of two carrying lopps (13) arranged on the end faces of the bearing block (1) is greater in the longitudinal direction of the base section (8), in the area of the free suspension space (19), than the distance between the other legs (15) of the two carrying loops (13).

10. A device according to any of claims 1 to 9, characterised in that there is provided beneath the carrying loop (13) on the base section (8) at least one inclined lead-in part (11) for centering the carrying loop when several bearing blocks (1) are stacked one on top of the other.

11. A device according to claim 10, characterised in that the base section (8) of the bearing block (1) having carrying loops (13) on its end faces is designed as an essentially rectangular sectional frame and the inclined lead-in part is designed as a stiffening brace of the sectional frame.

12. A device according to any one of claims 1 to 11, characterised in that the supporting arms (5) of the girder (3) which can fit into the carrying loops for the purpose of suspension are arranged as cross struts between two longitudinal supports (4) of the girder (3) running parallel to the base section (8) of the bearing block (1) (Fig. 7), whereby the longitudinal supports (4) are designed in their cross-section as U-sections or square pipes or as round pipes, through which the carrying arms (5) run diametrically.

13. A device according to claim 12, characterised in that inclined guide surfaces (25) are provided on the underside of the longitudinal supports (4) of the girder (3) for guiding in between the carrying loops (13) of the bearing block (1).

14. A device according to claim 12 or 13, characterised in that a support roller (26) which engages in the carrying loop (13) of the bearing block (1) is mounted on the end sections of the supporting arms (5) projecting beyond the longitudinal supports (4) of the girder (3), whereby a microswitch (27) connected to an electric lead (28) for an occupied signal (light and/or acoustic signal when suspension has taken place) can be fitted in the support roller (26) of the supporting arm (5).

15. A device according to claim 14, characterised in that the support roller (26) has an outer contact ring (29) mounted elastically in a radial direction, against the internal surface (32) of which there lies an actuating plunger (31) of the microswitch (27), whereby the outer contact ring (29) of the support roller (26) can be mounted on at least one O-ring (30), made from a rubber-elastic material, on the end part of the supporting arm (5).

16. A device according to claim 15, characterised in that the microswitch (27) in the contact ring (29) of the support roller (26) is arranged in the area between two elastic O-rings (30) and that the contact ring (29) has a sealing lid (34) on its outer end face.

## Revendications

1. Dispositif pour emmagasiner et transporter des charges lourdes, en particulier des barres profilées métalliques, des tubes et analogues, avec au moins un support en U comprenant un corps de base (8) et deux éléments latéraux (12) sur lesquels est prévue respectivement une suspension dans laquelle peut être accroché un bras de support (5) d'une traverse (3), caractérisé en ce que la suspension du support (1) est conformée en anse fermée (13) avec deux branches (14, 15) inclinées en toit, l'une des branches (14) étant décalée latéralement par rapport à l'autre branche (15), dans le plan orienté transversalement à l'extension longitudinale du corps de base (8), pour former un espace libre d'accrochage (19) pour le bras de support 5.

2. Dispositif selon la revendication 1, caractérisé en ce que le déport (18) de la branche (14) pour l'espace libre d'accrochage (19) est réalisé au-dessous d'un élément de guidage (21) de la branche (14) qui, à partir du faîte de l'anse (13), s'étend en oblique vers le bas.

3. Dispositif selon l'une des revendications 1 ou 2, caractérisé en ce que le faîte de l'anse (13) est conformé en cintrage (16) en angle aigu des branches (14, 15).

4. Dispositif selon l'une quelconque des revendications 1 à 3, caractérisé en ce que l'anse (13) est fixée sur le corps de base (8) par des prolongements (17) qui font suite aux branches (14, 15) disposées en toit et constituent avec celles-ci l'élément latéral (12) du support (1).

5. Dispositif selon l'une des revendications 1 à 4, caractérisé en ce que l'anse (13) avec le déport (18) pour l'espace libre d'accrochage (19) et les prolongements (17) des branches (14, 15) est réalisée à partir d'un tube métallique cintré, de préférence, en toit pointu.

6. Dispositif selon l'une quelconque des revendications 1 à 4, caractérisé en ce que l'anse (13) avec les prolongements (17) des branches (14, 15) est réalisée à partir d'un acier plat cintré en toit pointu et que l'espace libre d'accrochage (19) dans la zone de déport de la branche inclinée (14) est constitué par un évidement (23) qui réduit la largeur de l'acier plat à une barrette de support (24) (fig. 5).

7. Dispositif selon l'une quelconque des revendications 1 à 6, caractérisé en ce que, au-dessous du déport (18) pour l'espace libre d'accrochage (19), une entretoise horizontale (22) est disposée entre les deux branches (14, 15) de l'anse (13) pour soutenir un support (1) supplémentaire empilé (fig. 4).

8. Dispositif selon la revendication 7, caractérisé en ce que l'entretoise (22) se trouve approximativement au milieu entre le corps de base (8) et le faîte de l'anse (13), entre les deux branches (14, 15) de celle-ci, et que sa longueur correspond à peu près à la largeur du corps de base (8).

9. Dispositif selon l'une quelconque des revendications 1 à 8, caractérisé en ce que, dans le sens longitudinal du corps de base (8), dans la zone de l'espace libre d'accrochage (19), la distance entre les deux branches (14, 15) de deux anses (13) disposées aux deux faces frontales du support (1) est plus grande que la distance entre les autres branches (15) des deux anses (13).

10. Dispositif selon l'une quelconque des revendications 1 à 9, caractérisé en ce que, au dessous de l'anse (13), le corps de base (8) comprend au moins un plan incliné d'enfilage (11) pour le centrage des anses lors de l'empilage de plusieurs supports (1).

11. Dispositif selon la revendication 10, caractérisé en ce que le corps de base (8) du support (1) comprenant les anses (13) frontales est conformé en châssis profilé sensiblement rectangulaire et que le plan incliné d'enfilage (11) forme une nervure raidisseuse du châssis profilé.

12. Dispositif selon l'une quelconque des revendications 1 à 11, caractérisé en ce que les bras de support (5) de la traverse (3) pouvant être accrochés dans les anses (13) sont disposés en tant qu'entretoises entre deux longerons (4) de la traverse (3) qui s'étendent parallèlement au corps de base (8) du support (1) (fig. 7), les longerons (4) étant constitués de profilés présentant une section en U, de tubes carrés ou de tubes cylindriques traversés diamétralement par les bras de support (5).

13. Dispositif selon la revendication 12, caractérisé en ce que, à la face inférieure des longerons (4) de la traverse (3), des surfaces de guidage inclinées (25) sont prévues pour l'enfilage entre les anses (13) du support (1).

14. Dispositif selon l'une des revendications 12 ou 13, caractérisé en ce qu'aux sections terminales des bras de support (5) dépassant les longerons (4) de la traverse (3) est monté un rouleau porteur (26) s'engageant dans l'anse (13) du support (1), un microrupteur (27) pour un message d'occupation (émission d'un signal optique et/ou acoustique après l'accrochage effectué) relié à un conducteur électrique (28) pouvant être monté dans le rouleau porteur (26) du bras de support (5) de la traverse (3).

15. Dispositif selon la revendication 14, caractérisé en ce que le rouleau porteur (26) comporte une bague de contact extérieure (29) montée de manière élastique dans le sens radial à la surface intérieure (32) de laquelle est appliqué un poussoir de manoeuvre (31) du microrupteur (27), la bague de contact extérieure (29) du rouleau porteur (26) pouvant être montée sur au moins un anneau torique (30) en matière élastique disposé dans la section terminale du bras de support (5).

16. Dispositif selon la revendication 15, caractérisé en ce que le microrupteur (27) est disposé à l'intérieur de la bague de contact (29) du rouleau porteur (26), dans l'intervalle entre deux anneaux toriques (30) élastiques, et que la bague de contact (29) présente, sur sa face frontale extérieure, un couvercle de fermeture (34).

FIG. 1

FIG. 2

FIG. 3

FIG. 4

FIG. 5

FIG. 6

0 193 005

FIG. 8

FIG. 9

FIG. 10

FIG. 7

FIG. 11